Europäisches Patentamt

European Patent Office

Office européen des brevets

(11) Veröffentlichungsnummer: **0 381 953**
**A1**

# EUROPÄISCHE PATENTANMELDUNG

(21) Anmeldenummer: **90100836.7**

(22) Anmeldetag: **16.01.90**

(51) Int. Cl.5: **B65D 88/12, B65D 90/02**

(30) Priorität: **04.02.89 DE 8901255 U**

(43) Veröffentlichungstag der Anmeldung:
**16.08.90 Patentblatt 90/33**

(84) Benannte Vertragsstaaten:
**AT BE CH DE DK FR GB IT LI NL SE**

(71) Anmelder: **THYSSEN INDUSTRIE AG**
**Am Thyssenhaus 1**
**D-4300 Essen 1(DE)**

(72) Erfinder: **Wegmann, Manfred**
**Gartenstrasse 21**
**D-5758 Fröndenberg-Langschede(DE)**
Erfinder: **Wrobbel, Herbert, Dipl.-Ing.**
**Geitlingstrasse 51**
**D-4630 Bochum 6(DE)**

(74) Vertreter: **Eberhard, Friedrich, Dr.**
**Am Thyssenhaus 1**
**D-4300 Essen 1(DE)**

(54) **Transportbehälter in Kastenform für den kombinierten Güterverkehr.**

(57) Die Transportbehälter sind innenseitig im Anschlußbereich zum Boden (1) mit Sockelscheuerleisten (10) ausgerüstet. Diese haben sich im rauhen, täglichen Einsatz als nichthinreichender Schutz für die Wände (2,3) gegen Beschädigung durch Gabelstapler und das Ladegut erwiesen, wobei es zu Beschädigungen der Wände (2,3) und von außen sichtbares Ausbeulen, besonders von profilierten Blechwänden (2,3) kommt. Die Haltbarkeit der Sockelscheuerleisten (10) wird verbessert und von außen sichtbare Ausbeulungen der Wände (2,3) werden vermieden, wenn die Sockelscheuerleisten (10) als mit dem Boden (1) verbundene doppelwandige Träger ausgebildet sind, auf die die Wände (2,3) aufgesetzt sind.

Fig.1

## Transportbehälter in Kastenform für den kombinierten Güterverkehr

Die Erfindung betrifft einen Transportbehälter in Kastenform für den kombinerten Güterverkehr mit Seitenwänden und wenigstens einer Stirnwand, die innenseitig im Anschlußbereich zum Boden Sockelscheuerleisten aufweisen.

Die Transportbehälter dienen als Wechselaufbauten im kombinierten Güterverkehr Straße/Schiene mit Normung nach BDF-, CEN-, FAKR-Norm oder auch als feste LKW-Aufbauten oder auch als Container. Die Transportbehälter sind aus der Praxis in verschiedenen Ausführungen bekannt. Sie bestehen in der Regel aus Niet- oder Klemmprofilen oder aus Schweißkonstruktionen. Die Rückwand wird von einer meistens zweiflügeligen Tür gebildet. Die Sockelscheuerleiste soll verhindern, daß das Transportgut oder ein Transportmittel beim Einbringen in den Transportbehälter gegen die Wände stößt. Bei den Sockelscheuerleisten handelt es sich um einfache Bleche, die nach Fertigstellung und Innenlackierung des Transportbehälters auf die Innenfläche der Wände aufgeklebt oder punktgeschweißt werden. Bei starkem Stoß oder Druck auf die Sockelscheuerleiste, insbesondere im Anschlußbereich an die Wände, werden nicht nur die Sockelscheuerleisten selbst, sondern auch die Wände beschädigt und ausgebeult. Das ist von außen sichtbar. Außerdem ist die Haltbarkeit der im allgemeinen aus Gründen der Gewichts- und Platzersparnis dünn ausgeführten Sockelscheuerleisten unbefriedigend.

Aufgabe der Erfindung ist es, die Haltbarkeit der Sockelscheuerleisten zu verbessern und von außen sichtbare Ausbeulungen der Wände zu vermeiden.

Diese Aufgabe wird dadurch gelöst, daß die Sockelscheuerleisten als mit dem Boden verbundene doppelwandige Träger ausgebildet sind, auf die die Wände aufgesetzt sind. Diese Konstruktion vermeidet die eingangs beschriebenen Nachteile, weil die Sockelscheuerleisten nicht mehr gesonderte Bauteile sind, sondern in die Konstruktion des Transportbehälters einbezogen sind. Werden die Sockelscheuerleisten innenseitig durch Stoß oder Druck beansprucht, können Beulen allenfalls an der inneren Wandung der Sockelscheuerleisten entstehen, nicht aber an der äußeren Wandung. Es empfiehlt sich, die Innenseite der doppelwandigen Träger etwas über die innere Begrenzung der Wände vorstehen zu lassen, damit das einzubringende Transportgut oder Transportmittel auch bei Berührung mit den Sockelscheuerleisten noch einen hinreichenden Abstand von den Wänden behält.

Im einzelnen kann die Erfindung wie folgt vorteilhaft ausgestaltet sein.

In einer gut zu fertigenden, leichtbauenden Ausführungsart sind die Wände profilierte Wände aus Blech. Bei diesen kommt es wegen der besonderen Empfindlichkeit gegen Verhaken beim Laden besonders darauf an, daß eine Berührung mit der Gabel eines Gabelstaplers oder mit dem Ladegut vermieden wird. Auch bei glatten Wänden, z.B. aus Ply-Wood oder bei einer innen aufgebrachten Isolierung verhindert die Sockelscheuerleiste Beschädigungen.

Eine bevorzugte Ausführung der Erfindung ist dadurch gekennzeichnet, daß die doppelwandigen Träger aus Abkantblechen zusammengesetzt sind. Das ermöglicht eine einfache Herstellung der Sockelscheuerleisten und erhöht das Gewicht des Transportbehälters insgesamt nicht oder nur unwesentlich.

Dabei können die Abkantbleche auch mehrfach abgekantet und so ausgebildet sein, daß sie zusätzliche Funktionen übernehmen können. Insbesondere kann das äußere Abkantblech einen mit der äußeren Begrenzung der profilierten Wände im wesentlichen fluchtenden Abschnitt, einen daran anschließenden, mit der Bodenfläche fluchtenden Abschnitt und einen Anschlußabschnitt für die Bodenträger aufweisen. Dieses äußere Abkantblech wird dementsprechend in die Bodenkonstruktion einbezogen und sichert einen hinreichend stabilen Anschluß zwischen Bodenkonstruktion und profilierten Wänden.

Das innere Abkantblech kann demgegenüber einen L-förmigen Querschnitt besitzen und mit dem längeren L-Schenkel auf dem mit der Bodenfläche fluchtenden Abschnitt des äußeren Abkantbleches aufstehen.

Grundsätzlich ist es auch möglich, die Sockelscheuerleisten als Kastenträger auszubilden.

Im folgenden wird ein in der Zeichnung dargestelltes Ausführungsbeispiel der Erfindung erläutert; es zeigen:

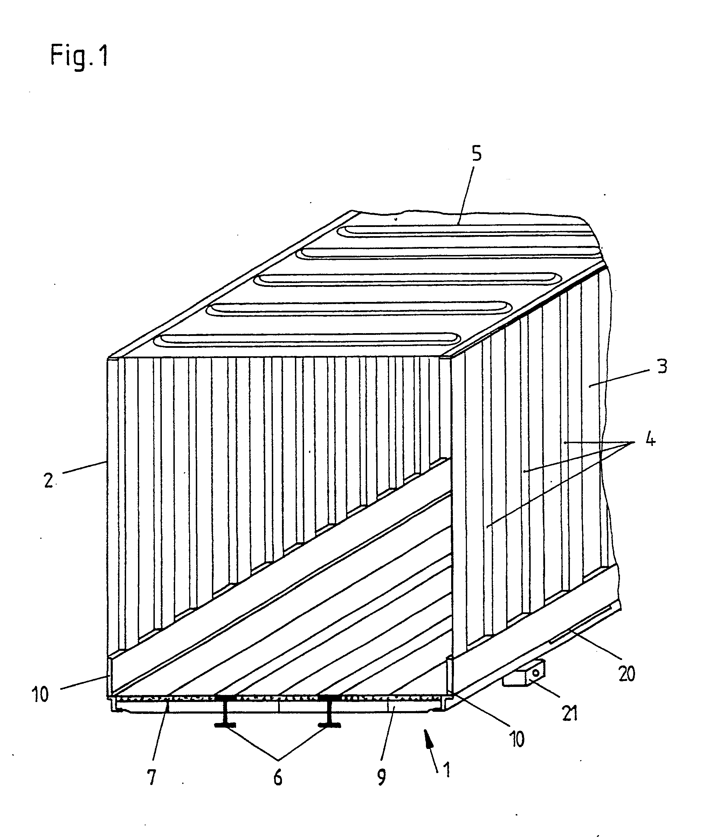

Fig. 1 in perspektivischer Darstellung einen Teil eines Transportbehälters in Kastenform für den kombinierten Güterverkehr,

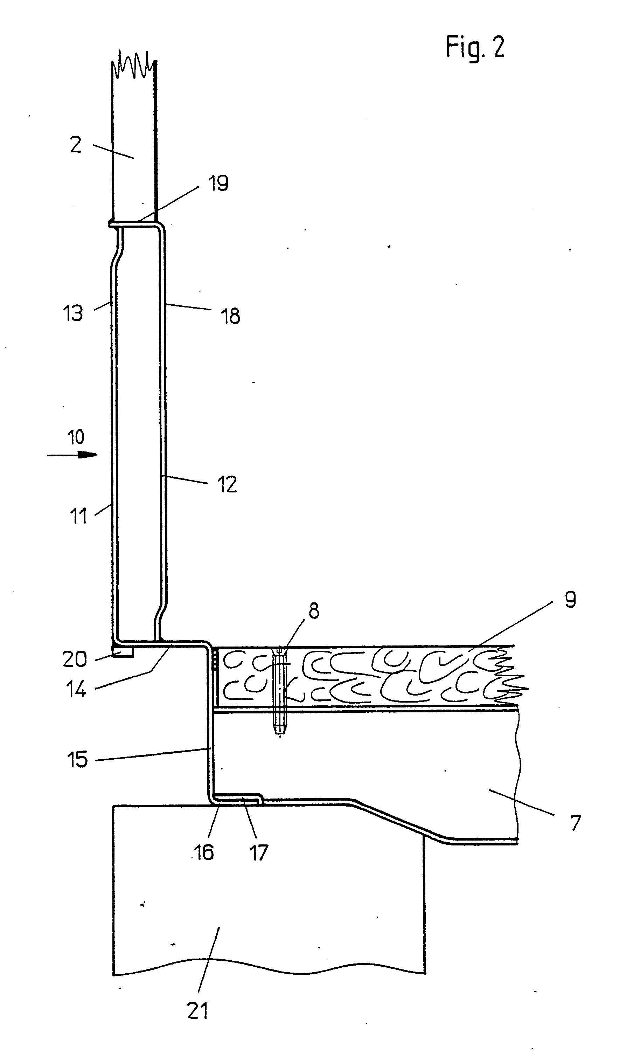

Fig. 2 in vergrößertem Maßstab einen Schnitt durch den Transportbehälter nach Figur 1 im Bereich der Sockelscheuerleiste.

Der dargestellte Transportbehälter besteht in seinem grundsätzlichen Aufbau aus einer Bodenkonstruktion 1, Seitenwänden 2,3 und wenigstens einer nicht dargestellten Stirnwand mit trapezförmigen, sich in vertikaler Richtung erstreckenden Profilierungen 4 sowie einem Dach 5. Die nicht dargestellte Rückwand wird von einer zweiflügeligen Tür gebildet.

Die Bodenkonstruktion 1 besteht aus Längsträgern 6 und Querträgern 7, auf denen mit Schrauben 8 ein Bodenbelag 9 aus Holz befestigt ist.

Die Seitenwände 2,3 und die nicht dargestellte profilierte Stirnwand weisen im Übergangsbereich zum Boden Sockelscheuerleisten 10 auf. Die Sockelscheuerleisten 10 sind als doppelwandige Träger ausgebildet. Sie bestehen aus einem äußeren Abkantblech 11 und einem inneren Abkantblech 12. Das äußere Abkantblech 11 besitzt einen mit der äußeren Begrenzung der profilierten Seitenwände 2 bzw. 3 im wesentlichen fluchtenden Abschnitt 13, an den sich ein weiterer Abschnitt 14 anschließt, der mit der Oberseite des Bodenbelags 9 fluchtet. Von diesem Abschnitt 14 ist ein weiterer Abschnitt 15 abgekantet, der sich wieder in vertikaler Richtung erstreckt und gegen den die Enden der Querträger 7 stoßen.

An den vertikalen Abschnitt 15 schließt ein weiterer horizontaler Abschnitt 16 an, der die Querträger 7 unterfaßt oder in zugeordnete Ausnehmungen 17 an den Enden der Querträger 7 eingreift. Das innere Abkantblech 12 besitzt ein L-förmiges Profil und steht mit seinem längeren L-Schenkel 18 auf dem Abschnitt 14 des äußeren Abkantbleches 11 auf, während der kürzere L-Schenkel 19 die Oberkante des vertikalen Abschnitts 13 des äußeren Abkantbleches 11 überfaßt. Auf den kürzeren L-Schenkel 19 des inneren Abkantbleches 12 sind die unteren Ränder der Seitenwände 2,3 und der nicht dargestellten profilierten Stirnwand aufgesetzt. Alle Stoßstellen sind, wie dargestellt, miteinander verschweißt.

Der vertikale Abschnitt 13 des äußeren Abkantbleches 11 und der längere L-Schenkel 18 des inneren Abkantbleches 12 verlaufen im wesentlichen parallel zueinander. Der längere L-Schenkel 18 des inneren Abkantbleches 12 steht innenseitig etwas über die innere Begrenzung der Seitenwände 2,3 vor.

Aus der Zeichnung entnimmt man ferner, daß unter dem mit dem Bodenbelag 9 fluchtenden Abschnitt 14 stückweise ein Profil 20 als Greifkante angebracht ist. Ferner gehören zur Bodenkonstruktion 1 Befestigungsbeschläge 21, die unter den Querträgern 7 angebracht sind.

## BEZUGSZEICHENLISTE

1 Bodenkonstruktion
2 Seitenwand
3 Seitenwand
4 Profilierungen
5 Dach
6 Längsträger
7 Querträger
8 Schrauben
9 Bodenbelag
10 Sockelscheuerleisten
11 äußeres Abkantblech
12 inneres Abkantblech
13 Abschnitt
14 Abschnitt
15 Abschnitt
16 Abschnitt
17 Ausnehmung
18 L-Schenkel
19 L-Schenkel
20 Profil
21 Befestigungsbeschläge

## Ansprüche

1. Transportbehälter in Kastenform für den kombinierten Güterverkehr mit Seitenwänden und wenigstens einer Stirnwand, die innenseitig im Anschlußbereich vom Boden Sockelscheuerleisten aufweisen, dadurch gekennzeichnet, daß die Sockelscheuerleisten (10) als mit dem Boden (1) verbundene doppelwandige Träger (11,12) ausgebildet sind, auf die die Wände (2,3) aufgesetzt sind.

2. Transportbehälter nach Anspruch 1, dadurch gekennzeichnet, daß die Wände (2,3) als profilierte Wände aus Blech ausgebildet sind.

3. Transportbehälter nach Anspruch 1 oder 2, dadurch gekennzeichnet, daß die Innenseite der doppelwandigen Träger (11,12) etwas über die innere Begrenzung der profilierten Wände (2,3) vorsteht.

4. Transportbehälter nach einem der Ansprüche 1 bis 3, dadurch gekennzeichnet, daß die doppelwandigen Träger aus Abkantblechen (11,12) zusammengesetzt sind.

5. Transportbehälter nach Anspruch 4, dadurch gekennzeichnet, daß das äußere Abkantblech (11) einen mit der äußeren Begrenzung der profilierten Wände (2,3) im wesentlichen fluchtenden Abschnitt (13), einen daran anschließenden, mit der Bodenfläche (9) fluchtenden Abschnitt (14) und einen Anschlußabschnitt (15,16) für die Bodenträger (7) aufweist.

6. Transportbehälter nach Anspruch 4 oder 5, dadurch gekennzeichnet, daß das innere Abkantblech (12) einen L-förmigen Querschnitt besitzt und mit dem längeren L-Schenkel (18) auf dem mit der Bodenfläche (9) fluchtenden Abschnitt (14) des äußeren Abkantbleches (11) aufsteht.

7. Transportbehälter nach einem der Ansprüche 1 bis 3, dadurch gekennzeichnet, daß die Sockelscheuerleisten (10) als Kastenträger ausgebildet sind.

Fig.1

Fig. 2

Europäisches
Patentamt
**EUROPÄISCHER RECHERCHENBERICHT**
Nummer der Anmeldung

EP 90 10 0836

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 463 729 (STE. NOUVELLE DECONSTRUCTIONS INDUSTRIALISEES - SNCI) * Seite 2, Zeilen 21-27; Figuren 1,3; Bezugszeichen 1.4 * --- | 1,2,3,4 ,5,6,7 | B 65 D 88/12 B 65 D 90/02 |
| A | US-A-3 910 446 (DOUGHERTY) * Spalte 4, Zeilen 13-26; Figuren 11,12 * ----- | 1,2,4,5 | |

|  | RECHERCHIERTE SACHGEBIETE (Int. Cl.5) |
|---|---|
|  | B 65 D |

Der vorliegende Recherchenbericht wurde für alle Patentansprüche erstellt

| Recherchenort | Abschlußdatum der Recherche | Prüfer |
|---|---|---|
| DEN HAAG | 16-05-1990 | BEERNAERT J.E. |